(19)

Europäisches
Patentamt
European
Patent Office
Office européen
des brevets

(11) **EP 4 495 451 A1**

(12) **EUROPEAN PATENT APPLICATION**

(43) Date of publication:
**22.01.2025 Bulletin 2025/04**

(21) Application number: **23306228.0**

(22) Date of filing: **17.07.2023**

(51) International Patent Classification (IPC):
***F16D 69/02*** (2006.01)     ***C01B 32/05*** (2017.01)

(52) Cooperative Patent Classification (CPC):
**F16D 69/026; C01B 32/21;** F16D 2200/0069

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **ImerTech SAS
75015 Paris (FR)**

(72) Inventor: **Gilardi, Raffaele
6500 Bellinzona (CH)**

(74) Representative: **Uexküll & Stolberg
Partnerschaft von
Patent- und Rechtsanwälten mbB
Beselerstraße 4
22607 Hamburg (DE)**

(54) **IMPROVED FRICTION MATERIALS**

(57)     The invention relates to a friction material composition comprising a) at least one binder, b) at least one additive, and c) a graphite material, wherein the graphite material has: i) a D90 to D10 ratio of less than 4.5, as measured by Laser Diffraction, and ii) a Scott density of at least 0.5 g/cm$^3$, as measured using a Scott Volumeter according to ASTM B 329-20. Methods and uses of the friction material are also described.

EP 4 495 451 A1

**Description**

**FIELD OF THE INVENTION**

The present invention relates to friction material compositions comprising graphite materials. The invention further relates to methods of making such friction material compositions, as well as their uses. In addition, the invention relates to brake pads and brake pad assemblies comprising the friction material compositions of the present invention.

**BACKGROUND OF THE INVENTION**

Friction materials for brake pads, brake linings, clutch facings or the like used for the brake and the clutch of motorcars, railroad vehicles, industrial machines, etc. are generally made by combining and molding principal raw materials comprising at least one binder and at least one additive.

Graphite powders have been previously employed in friction materials for brake pads. Typical graphite used in automotive brake pads comprises natural graphites and/or synthetic graphites of different particle sizes (from D90 of about 15 microns up to a D90 of about 2000 microns).

For example, EP 3 088 764 A1 discloses the use of resilient graphitic materials in non-asbestos organic (NAO) brake pads. A resilient graphitic carbon particle is made by expanding and forming a carbonaceous mesophase or coke, followed by graphitization at 1900 to 2700°C, in order to obtain a degree of graphitization of 80 to 95%, as measured according to X-ray analysis. It has improved volume recovery ratio when removing the added compressive load. In addition, crack formation is reduced, which in turn reduces chipping.

EP 3 674 371 A1 relates to friction materials comprising graphite having a c/2 of 0.3358 nm or less and a spring-back of 40% or more.

The brake pad market is evolving due to new regulations, which include regulations on dust emissions. In order to reduce dust emissions, coated brake discs may be used. However, the use of these types of brake discs requires new friction material compositions.

Furthermore, due to the advent of electric vehicles (EV), modifications to the brake pad formulations are needed. For example, brake pads for electric vehicles will need to have a more stable friction coefficient in order to reduce vibrations and noise.

Thus, it is an object of the present invention to provide novel friction material compositions having superior properties compared to the friction material compositions of the prior art. In particular, the present invention aims to provide friction material compositions having a highly stable friction coefficient. A stable friction coefficient is very important in order to have the same brake performance in all conditions, and it has a beneficial effect on noise reduction (less vibrations induced by unstable friction coefficient), which is a very important feature, in particular, for electric vehicles.

In addition, the temperature of the brake pads and brake discs needs to be controlled during braking. A large increase in temperature can lead to a decrease in braking efficiency. Furthermore, the brake pad may deteriorate when overheated. In particular, the surface of the disc may change its crystalline structure and the cast-iron structure turns into a much harder phase, called cementite, which results is uneven braking. Intensification of extreme overheating leads to further propagation of the crystalline structure of cementite on the surface of the brake disc, causing a change in its geometry and the disc often requiring replacement. Accordingly, it is another object of the present invention to provide friction material compositions for brake pads, which have a low temperature increase during braking.

It is another object of the present invention to provide suitable processes for producing such friction material compositions.

**SUMMARY OF THE INVENTION**

The present inventors have surprisingly found that by using specific graphite materials, it is possible to prepare friction materials having excellent properties. The friction material composition of the present invention may be used to prepare brake pads having improved friction coefficient stability. A stable friction coefficient is correlated with low squealing and vibrations, which would impair the quietness of the vehicle.

Furthermore, the inventive friction material compositions show a lower increase in temperature during braking. This is advantageous since overheating of the brake pad may cause a decrease in braking efficiency or the deteriorations of the material.

The present invention provides a friction material composition comprising:

a) at least one binder,
b) at least one additive, and
c) a graphite material, wherein the graphite material has:

i) a D90 to D10 ratio of less than 4.5, as measured by Laser Diffraction, and
ii) a Scott density of at least 0.5 g/cm$^3$, as measured using a Scott Volumeter according to ASTM B 329-20.

Further, the present invention provides a brake pad comprising the friction material composition of the present invention.

Further, the present invention provides a brake assembly comprising the brake pad of the present invention and a brake disc, wherein the brake disc is preferably a cast iron disc or a coated brake disc.

Further, the present invention provides a method of making the friction material composition of the present invention, comprising the steps of

(a) providing a feed graphite,
(b) subjecting the feed graphite to a milling step to obtain a milled graphite, preferably including mechanic spheroidization,
(c) removing at least one fraction of the milled graphite in order to obtain a final milled graphite material which has a D90 to D10 ratio of less than 4.5, as measured by Laser Diffraction, wherein preferably a fine fraction, which has a D50 lower than the feed graphite provided in step (a) and/or a coarse fraction, which has a D50 higher than the feed graphite provided in step (a) is removed,
(d) optionally subjecting the final milled graphite material provided in step (c) to a surface treatment, wherein the surface treatment preferably comprises a surface treatment by heat treatment and/or a surface coating treatment, such as a surface coating obtained by a chemical vapor deposition (CVD) treatment or an amorphous carbon coating treatment;
(e) mixing the treated graphite material obtained at the end of step (d) or the final milled graphite material obtained at the end of step (c) with at least one binder and at least one additive to form a friction material composition.

Moreover, the present invention is directed to the use of the friction material composition of the present invention in the production of brake pads.

Finally, the present invention is directed to the use of the friction material composition of the present invention for improving the friction coefficient stability of a brake pad comprising said friction material composition.

## BRIEF DESCRIPTION OF THE DRAWINGS

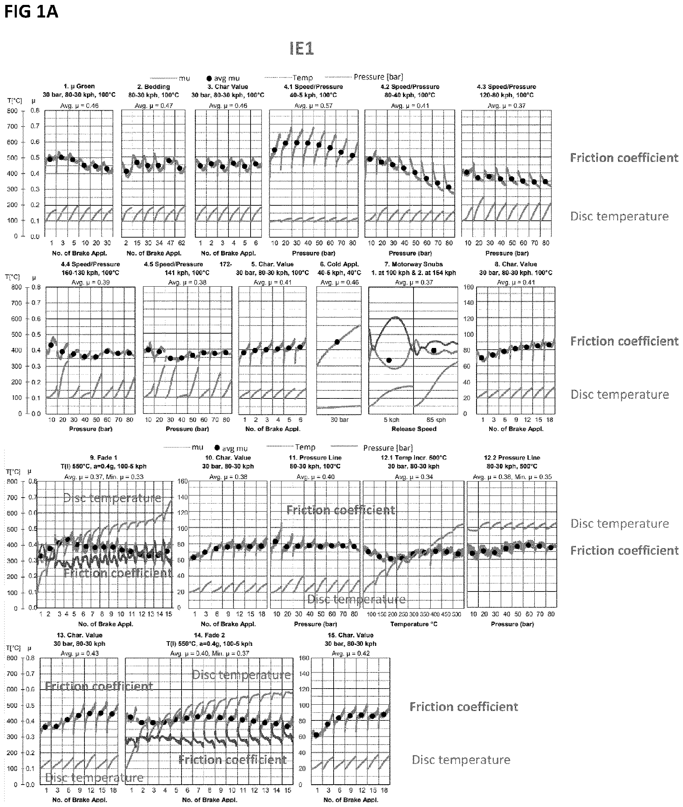

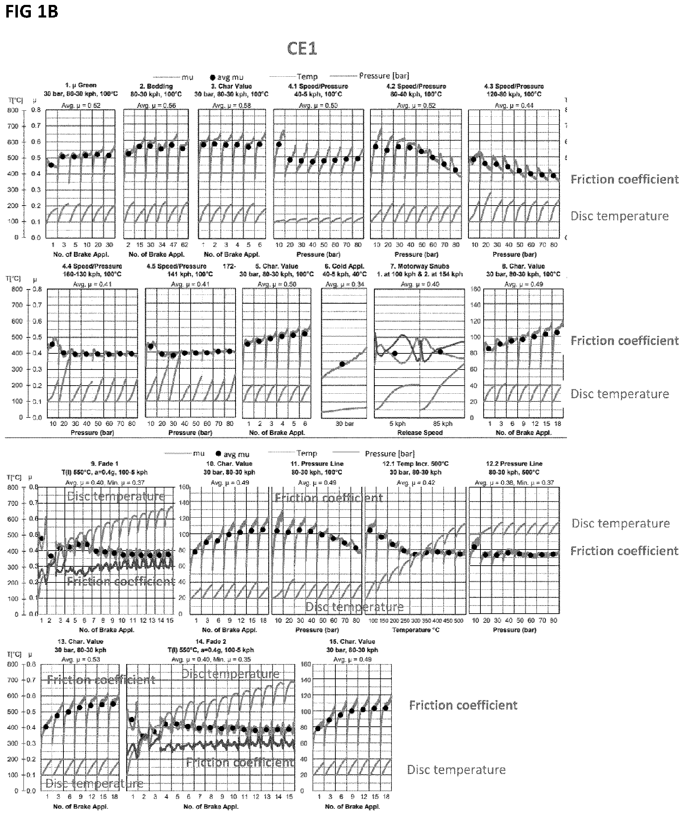

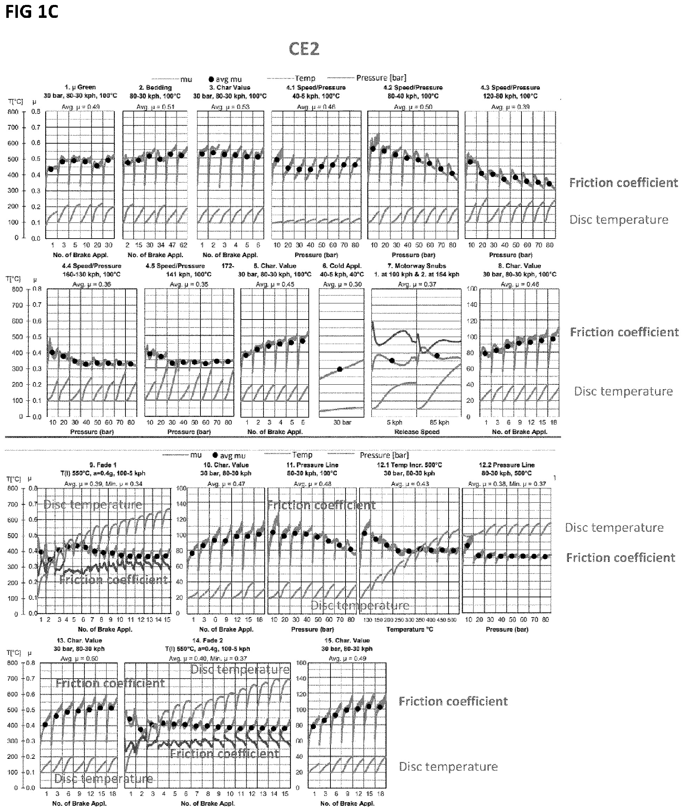

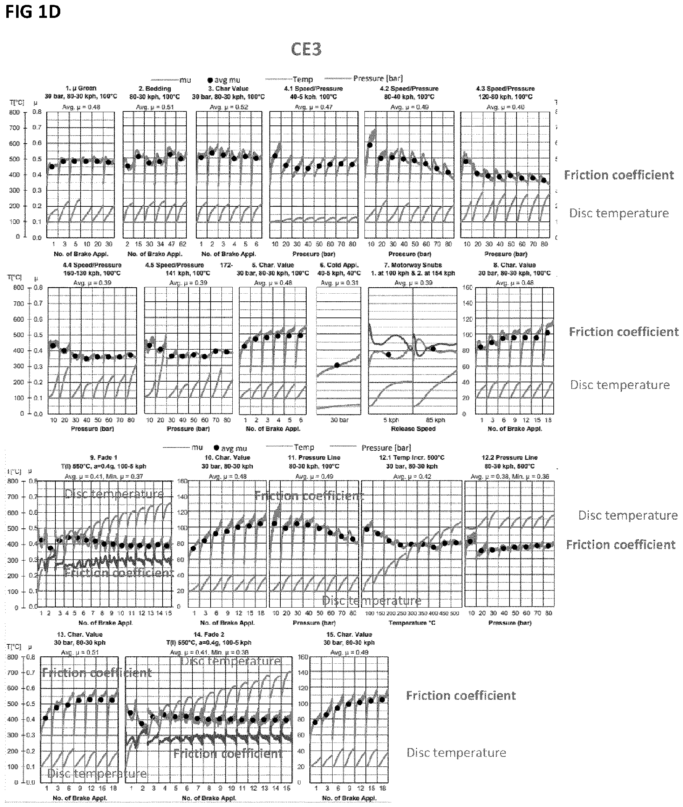

**Figure 1** is a representation of the results of the performance test according to SAE J2522 (Figure 1A: Inventive graphite material IE1, Figure 1B: Comparative graphite material CE1; Figure 1C: Comparative graphite material CE2; Figure 1D: Comparative graphite material CE3, in all Figures the bold graph represents the friction coefficient and the non-bold graph the disc temperature, see also labeling of the different graphs in this regard).

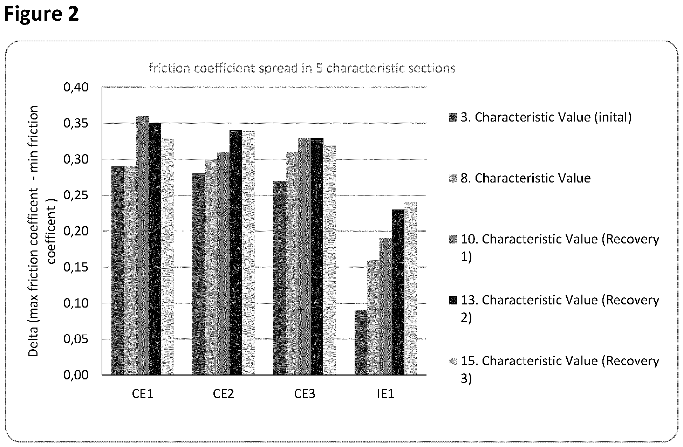

**Figure 2** is a chart depicting the stability of the friction coefficients in five characteristics sections (delta max-min of Section 3, 8, 10, 13 and 15) of the performance test according to SAE J2522.

## DETAILED DESCRIPTION OF THE INVENTION

The friction material compositions of the present invention and their different components and properties are described in more detail below. All explanations apply to the further aspects of the present invention as well, such as the method of the present invention, the brake pad, the brake assembly and the different uses of the friction material compositions. It is understood that the following description and references to the figures concern exemplary embodiments of the present invention and shall not be limiting the scope of the claims.

Friction material

In a first aspect, the present invention provides a friction material composition comprising at least one binder, at least one additive and a graphite material, wherein the graphite material has a D90 to D10 ratio of less than 4.5, and a Scott density of at least 0.5 g/cm$^3$.

The graphite material is characterized by a particle size distribution (PSD) with a D90 to D10 ratio of less than 4.5, wherein 10 percent (by volume) of the particle population has a size below the D10 value and 90 percent (by volume) of the particle population has a size below the D90 value. The particle size distribution may be measured using Laser Diffraction.

In a preferred embodiment, the graphite material has a D90 to D10 ratio of less than 4.0, preferably less than 3.5, such as less than 3 or less than 2.5. The graphite material may have a D90 to D10 ratio of 1.1 to 4.5, preferably 1.1 to 4.0, 1.1 to 3.5, 1.2 to 3.5, 1.1 to 3.0, 1.2 to 3.0, 1.2 to 2.5 or 1.3 to 2.5. In particular, the graphite material may have a D90 to D10 ratio of 1.5 to 4.5, preferably 1.5 to 4.0, 1.5 to 3.5 or 1.5 to 3.0.

The graphite material contained in the friction material composition of the present invention is further characterized by a Scott density of at least 0.5 g/cm$^3$. In a preferred embodiment, the graphite material has a Scott density of at least 0.55 g/cm$^3$, such as at least 0.6 g/cm$^3$, at least 0.65 g/cm$^3$ or at least 0.70 g/cm$^3$. In a preferred embodiment, the Scott density is 0.5 to 2.0 g/cm$^3$, such as 0.55 to 2.0 g/cm$^3$, 0.55 to 1.5 g/cm$^3$, 0.6 to 1.5 g/cm$^3$ or 0.6 to 1 g/cm$^3$, or 0.7 to 1 g/cm$^3$. The Scott density can be measured using a Scott volumeter according to ASTM B 329-20.

It will further be understood that the graphite material may be further defined by each D90 to D10 ratio and Scott density (of course provided they are not mutually exclusive).

The graphite material of the present invention may have a D90 to D10 ratio of less than 4.0, and a Scott density of at least 0.6 g/cm$^3$.

In one embodiment of the present invention, the graphite material of the present invention has a D90 to D10 ratio of less than 3.5, and a Scott density of at least 0.6 g/cm$^3$.

In one embodiment of the present invention, the graphite material of the present invention has a D90 to D10 ratio of less than 3.5, and a Scott density of at least 0.65 g/cm$^3$.

In one embodiment of the present invention, the graphite material has a D90 to D10 ratio of 1.1 to 3.5 and a Scott density of 0.6 to 2.0 g/cm$^3$.

The friction material composition of the present invention may further comprise at least one supplemental graphite material, wherein the at least one supplemental graphite material has a D90 to D10 ratio of more than 4.5, as measured by Laser Diffraction, and/or a Scott density of less than 0.5 g/cm$^3$, as measured using a Scott Volumeter according to ASTM B 329-98 20.

The at least one supplemental graphite material may be a natural, synthetic, or expanded graphite. For example, the friction material composition may further comprise commercially available graphite materials such as TIMREX C-THERM available from Imerys Graphite & Carbon in case of high thermal conductivity friction materials. It is to be understood that all further explanations made for the graphite material apply also to the at least one supplemental graphite material.

The graphite material is in some embodiments further characterized by a D90 of less than 60, or less than 55 $\mu$m, less than 50 $\mu$m, less than 45 $\mu$m, or less than 40$\mu$m. The graphite material of the present invention is in some embodiments further characterized by a D90 of at least 5 $\mu$m or of at least 10 pm or of at least 15.0 $\mu$m. The graphite material may have a D90 of 5 to 60 pm, preferably of 10 to 50 pm, such as 15 to 40 pm (always provided that the ratio of D90 to D10 ratio is less than 4.5).

In one embodiment of the present invention, the graphite material has a D90 to D10 ratio of less than 4.0, a Scott density of at least 0.6 g/cm$^3$ and a D90 of 5 to 60 $\mu$m.

Likewise, the particle size distribution value D50 of the graphite material may in some embodiments range from 1 to 50 pm, wherein 50 percent (by volume) of the particle population has a size below the D50 value. In some embodiments, the D50 may be between 1 to 40 pm, optionally between 5 to 40 pm, or between 10 to 40 pm, or between 10 to 30 pm, or between 10 to 20 pm.

Moreover, in the same or different embodiments, the graphite material may be further characterized by a particle size distribution having a D10 of at least 1 pm or of at least 5 pm or of at least 7.0 $\mu$m. The graphite material of the present invention may have a D10 of 1 to 50 pm, or 5 to 40 pm or 7 to 30 pm (always provided that the ratio of D90 to D10 ratio is less than 4.5).

According to one embodiment of the present invention, the graphite material may have a c/2 of 0.3359 nm or less, such as 0.3358 nm or less, or 0.3357 nm or less.

In one embodiment of the present invention, the graphite material has a D90 to D10 ratio of less than 4.0, a Scott density of at least 0.6 g/cm$^3$ and a c/2 of 0.3357 nm or less.

According to one embodiment of the present invention, the graphite material has a spring-back of more than 20%, or more than 25%, or more than 30%. The graphite material may have a spring-back between 20 and 60 %, such as between 20 and 50%, or between 25 and 40 %, or between 30 and 40 %.

In one embodiment of the present invention, the graphite material has a D90 to D10 ratio of less than 4.0, a Scott density of at least 0.6 g/cm$^3$ and a spring-back between 30 and 40 %.

According to one embodiment of the present invention, the graphite material has a crystallinity Lc of 50 nm or more. For example, the graphite material may have a crystallinity Lc of 100 nm or more, or a crystallinity Lc of 140 nm or more, or a crystallinity Lc of 170 nm or more, or a crystallinity Lc of 180 nm or more. As used herein, the crystallinity Lc designates the average crystallite size of graphite.

In one embodiment of the present invention, the graphite material has a D90 to D10 ratio of less than 4.0, a Scott density of at least 0.6 g/cm$^3$ and a crystallinity Lc of 180 nm or more.

The graphite materials may be further characterized by a BET surface area of at least 3.0 m$^2$/g, or at least 3.5

$m^2/g$, or at least 3.7 $m^2/g$, or at least 3.8 $m^2/g$. The BET surface area can be measured based on the procedure proposed by Brunauer, Emmet and Teller (Adsorption of Gases in Multimolecular Layers, J. Am. Chem. Soc., 1938, 60, 309- SI 9).

According to one embodiment of the present invention, the graphite material has a BET surface area of 9.0 $m^2/g$ or less. For example, the graphite material comprised in the friction material composition according to the present invention may have a BET surface area of 8.0 $m^2/g$ or less, or a BET surface area of 7.0 $m^2/g$ or less, or a BET surface area of 6.0 $m^2/g$ or less, or a BET surface area of 5.0 $m^2/g$ or less, or a BET surface area of 4.5 $m^2/g$ or less. One advantage of a lower BET surface area is generally the lower resin consumption and lower moisture absorption.

According to one embodiment of the present invention, the graphite material has a BET surface area of 3.0 to 9.0 $m^2/g$ or less. For example, the graphite material comprised in the friction material composition according to the present invention may have a BET surface area of 3.0 to 8.0 $m^2/g$, or a BET surface area of 3.5 to 7.0 $m^2/g$ or less, or a BET surface area of 3.5 to 6.0 $m^2/g$, or a BET surface area of 3.7 to 6.0 $m^2/g$, or a BET surface area of 3.7 to 5.0 $m^2/g$, or even a BET surface area of 3.8 to 4.5 $m^2/g$.

In one embodiment of the present invention, the graphite material has a D90 to D10 ratio of less than 4.0, a Scott density of at least 0.6 $g/cm^3$ and BET surface area of 7.0 $m^2/g$ or less.

In one embodiment of the present invention, the graphite material has a D90 to D10 ratio of 1.1 to 3.5, a Scott density of 0.6 to 2.0 $g/cm^3$, and at least one of:

- a D90 of 5 to 60 pm, and/or
- a c/2 of 0.3357 nm or less
- a spring-back between 30 and 40 %, and/or
- a crystallinity Lc of 180 nm or more, and/or
- a BET surface area of 7.0 $m^2/g$ or less.

According to some embodiments of the present invention, the graphite material for use in the friction material composition may be a natural graphite, or a synthetic graphite, or a mixture thereof.

According to one embodiment of the present invention, the graphite material for use in the friction material composition is a recycled graphite material. The recycled graphite material may be recovered from battery electrodes. In a preferred embodiment, the recycled graphite material is recovered from lithium ion batteries, in particular the graphite anodes of lithium ion batteries. The battery electrodes can be thermally or chemically treated to separate the graphite material from the other components.

The graphite material may be milled natural or synthetic graphite. Preferably, a mechanically spheroidized natural or synthetic graphite is used.

According to one embodiment of the present invention, the graphite material is a surface-modified graphite material. The term "surface-modified" in connection with graphite or carbonaceous particles is generally understood in the art to refer to particles whose surface has been modified chemically, e.g., by introducing additional functional groups on the surface of the carbonaceous particle, or by adding a layer (which may be complete or incomplete) of amorphous or at least essentially non-crystalline carbon on the surface of the carbonaceous particle. Introducing additional functional groups can be achieved, for example, by exposing carbonaceous particles to oxygen (or species that are capable of releasing oxygen) under controlled conditions (as opposed to a simple exposure of particles to air which may or may not be sufficient to change the Chemical Constitution of the surface of the particles). Adding amorphous/non-graphitic carbon is typically achieved by pitch-coating, plasma polymerization or various vapor deposition techniques (such as CVD and the like). In the context of the present application, surface treatment and surface modification are considered to be synonyms.

The graphite material for use in the friction material composition may be a milled natural or synthetic graphite which was subjected to a surface modification. In a preferred embodiment, the graphite material for use in the friction material composition is first mechanically spheroidized and then subjected to a surface treatment.

In a preferred embodiment, natural or synthetic graphite (feed graphite) is mechanically spheroidized and then further surface-treated, wherein the surface treatment preferably comprises a surface treatment by heat treatment and/or a surface coating treatment, such as a surface coating obtained by a chemical vapor deposition (CVD) process.

According to one embodiment of the present invention, the surface modification of the graphite material includes a surface modification by heat treatment. For example, the heat treatment may be a heat treatment under $N_2$ at a temperature of 600°C or higher, such as a temperature of 800°C or higher, or a temperature of 1000°C or higher, or a temperature of 1200°C or higher, such as for example a temperature of 1400°C.

According to one embodiment of the present invention, the surface modification may be a surface-coating treatment such as a chemical vapor deposition (CVD) treatment, or a coating of the graphite particles with a carbon precursor and subsequent carbonization in an inert gas atmosphere. The surface coating can be done simultaneously with or separately from the heat treatment, such as for example subsequently to the heat treatment.

According to yet another embodiment of the present invention, the surface modification of the graphite material includes a surface modification by heat treatment, and in addition a surface coating obtained for example by a CVD process, coating the graphite material surface with amorphous carbon, or with a coating of a carbon precursor at the graphite material surface and carbonization by a subsequent heat treatment in an inert gas atmosphere.

The graphite material used in the friction material composition of the present invention can be produced by the process described in detail below.

Binder

The friction material composition of the present invention comprises at least one binder. Binders for use in friction material compositions are commonly known in the art. Examples of suitable binders are resins or cement binders.

In a preferred embodiment of the present invention, the binder is a phenolic resin (phenol formaldehyde resin) such as a phenolic novolac resin. Furthermore, a modified phenolic resin such as epoxy modified phenolic resin, organic silicon modified phenolic resin, polyamide modified phenolic resin, acrylic modified phenolic resin, boron modified phenolic resin, aralkyl modified phenolic resin, and rubber modified phenolic resin may be used.

The friction material composition of the present invention may further comprise a mixture of different types of binders.

Additive

The friction material composition of the present invention further comprises at least one additive. The at least one additive may be selected from the group consisting of fibers, abrasives, lubricants, and/or fillers.

According to one embodiment of the present invention, the friction material composition comprises at least one type of fibers. The fibers may provide further integrity and structural strength to the friction material. Fibers also help with stability of pre-cured preforms during the manufacturing process. Various fibers and fiber lengths can thus be used to control manufacturing and performance characteristics of the friction material. The fibers can be synthetic or natural in origin, and pure or recycled in form.

The fibers can be selected from one or more of organic fibers, mineral fibers, and metal fibers. The organic fibers may be one or more of aromatic polyamide fibers (aramid fibers), poly(acrylonitrile) (PAN) fibers, cellulose fibers, cotton fibers, carbon fibers, and the like. The mineral fibers can be one or more of rock wool fibers, glass fibers, aluminum silicate fibers, sepiolite fibers, wollastonite fibers, basalt fibers, ceramic fibers and the like. The metal fibers can be one or more of steel fibers, aluminum fibers, brass fibers, copper fibers, zinc fibers, and the like.

In a preferred embodiment the fibers are selected from one or more of aromatic polyamide fibers, poly(acrylonitrile) fibers, cellulose fibers, carbon fibers, steel fibers, brass fibers and copper fibers.

The friction material composition may comprise 1 to 60 wt% of fibers, based on the total weight of the friction material, preferably 5 to 50 wt% or 10 to 40 wt.

According to one embodiment of the present invention, the friction material composition comprises at least one abrasive, such as a hard abrasive or a mild abrasive. Examples of hard abrasives include zirconia, alumina, magnesium oxide, zirconium silicate, silica, silicon dioxide, sand, silicon carbide, mullite, and iron oxide. Hard abrasives tend to have higher values on the Mohs hardness scale. Other examples of abrasives include some grades of ceramic fibers including complex mineral silicates such as calcium magnesium silicate, calcium magnesium zirconium silicate, calcium magnesium aluminum silicate, and magnesium aluminum silicate, as well as andalusite, vermiculite, potassium titanate and chromite. Other known abrasives that are mild in nature include iron oxides of different chemistries, other metallic oxides, and materials and minerals that have relatively lower values on the Mohs hardness scale. The hard abrasives are generally used in low concentrations while the mild abrasives are typically used in higher concentrations to achieve the same desired friction level.

In a preferred embodiment, the abrasive may be selected from potassium titanate, iron oxide, magnesium oxide, andalusite, mullite, silicon carbide, vermiculite, zirconia, zirconium silicate, calcium compounds such as calcium fluoride, chromite and mixtures thereof.

The friction material composition may comprise 1 to 50 wt% of abrasives, based on the total weight of the friction material composition, preferably 5 to 40 wt%.

In a preferred embodiment, a mixture of different abrasives is used in the friction material composition of the present invention such as two, three, four, five or six different abrasives.

According to one embodiment of the present invention, the friction material composition comprises at least one lubricant. The lubricant may reduce pad and disc wear during service. Candidate lubricant materials include metal sulfides, non-metal sulfides, organic lubricants, metal lubricants or a combination thereof. Examples of metal sulfides include, but are not limited to, tin sulfides, antimony trisulfide, zinc sulfide, and iron sulfide. An example of an organic lubricant is phthalocyanine and examples of metal lubricants include copper, tin and zinc powders. Metal sulfides include metal sulfide complexes such as those having tin sulfide as one of the main ingredients.

According to one embodiment of the present invention, the lubricant is selected from graphite such as synthetic graphite, natural graphite, and expanded graphite; coke powder, such as petroleum coke powder or desulfurized coke powder, metal sulfide such as antimony trisulfide, copper powder, and mixtures thereof.

The friction material composition may comprise 1 to 40 wt% of lubricants, based on the total weight of the friction material composition, preferably 2 to 30 wt%, 3 to 25 wt%, 4 to 20 wt% or 5 to 15 wt%.

In a preferred embodiment, a mixture of different lubricants is used in the friction material composition of the present invention such as two, three, four, five or six different lubricants.

According to one embodiment of the present invention, the friction material composition comprises at least one filler. Examples of suitable fillers include lime, calcium oxide, calcium carbonate, barytes, including barium sulfate, calcium silicate, rubber including various powder rubbers, such as powdered nitrile rubber, and recycled rubber, and friction dust including brown, black, straight, modified or other grades of friction dust.

According to one embodiment of the present invention, the fillers may be selected from barytes, calcium carbonate, cashew nutshell oil friction powder, tire powder, mica powder, rubber powder, tire powder, talc and mixtures thereof.

In a preferred embodiment, the friction material composition comprises at least one type of fiber, at least one abrasive, at least one lubricant, and at least one filler.

According to yet a further embodiment of the present invention, the friction material composition may comprise at least one additive selected from the group consisting of aluminum oxide, magnesium oxide, mullite, silicon carbide, zirconia, calcium carbonate, talc, metal sulfides such as antimony trisulfide, metal fibers, aramid fibers, mineral fibers, glass fibers, carbon fibers, steel fibres, barite powder, bauxite, kaolin, sepiolite powder, titanate, dolomite powder, wollastonite powder, iron oxide, magnesium oxide, vermiculite, chromite diatomite, zeolite powder, mica powder, calcium sulfate, calcium fluoride, aluminium oxide, baryte, antimony trisulfide rubber powder, tire powder, cashew nut shell oil friction powder, coke, composite elastic particles and mixtures thereof.

<u>Friction material</u> composition

According to one embodiment of the present invention, the friction material composition comprises from 0.1 wt% to 30 wt% of the graphite material having the properties as defined above, based on the total weight of the friction material composition. The graphite material may be present in the friction material composition in an amount of 0.1 wt% or more, such as in an amount of 0.1 wt% or more, or in an amount of 0.5 wt% or more, or in an amount of 1 wt% or more, or in an amount of 2 wt% or more, or in an amount of 3 wt% or more, or in an amount of 3 wt% or more, or in an amount of 4 wt% or more, or in an amount of 5 wt% or more, based on the total weight of the friction material composition.

For example, the graphite material may be present in the friction material composition in an amount of 30 wt% or less, such as for example in an amount of 25 wt% or less, or in an amount of 20 wt% or less, or in an amount of 15 wt% or less, or in an amount of 10 wt% or less, or in an amount of 9 wt% or less, or in an amount of 8 wt% or less, based on the total weight of the friction material composition.

In a preferred embodiment, the friction material composition comprises 0.1 to 30 wt% of the graphite material, based on the total weight of the friction material, such as 1 to 20 wt% or 1 to 15 wt%, or 2 to 10 wt%, or 3 to 9 wt%, or 4 to 8 wt%, based on the total amount of friction material composition.

The friction material composition may comprise 1 to 20 wt% binder, preferably 2 to 15 wt% binder or 3 to 10 wt%, based on the total weight of the friction material composition.

Furthermore, the friction material composition may comprise 1 to 95 wt% additives, preferably 3 to 80 wt% additives, based on the total weight of the friction material composition.

According to certain embodiments, the friction material composition comprises less than 5 wt% copper, such as for example less than 1 wt% copper, or less than 0.5 wt% copper, or less than 0.1 wt% copper, based on the total weight of the friction material composition. According to certain embodiments, the friction material composition is free of copper. As used herein a friction material composition is considered free of copper if it comprises less than 0.05 wt% copper, or no detectable copper.

According to one specific embodiment of the present invention, the friction material composition has a copper content of 5 wt% or less, for example a copper content of 0.5 wt% or less. According to one embodiment of the present invention, the friction material composition is essentially free of copper.

The friction material composition of the present invention may further comprise at least one supplemental graphite material, wherein the at least one supplemental graphite material has a D90 to D10 ratio of more than 4.5, and/or a Scott density of less than 0.5 g/cm$^3$. In a preferred embodiment, the friction material composition comprises 0.1 to 30 wt% supplemental graphite material, based on the total weight of the friction material composition, such as 1 to 20 wt% or 1 to 15 wt%, or 2 to 10 wt%, or 3 to 9 wt%, or 4 to 8 wt%, based on the total amount of friction material composition.

The friction material composition of the present invention may comprise one or more further ingredients typically used in friction materials, as known to the skilled person in the art.

The friction material composition may have the form of a powder.

Method

In a second aspect, the present invention provides for a method of making a friction material composition, comprising the steps of

(a) providing a feed graphite,

(b) subjecting the feed graphite to a milling step to obtain a milled graphite,

(c) removing at least one fraction of the milled graphite in order to obtain a final milled graphite material which has a D90 to D10 ratio of less than 4.5,

(d) optionally subjecting the final milled graphite material provided in step (c) to a surface treatment,

(e) mixing the treated graphite material obtained at the end of step (d) or the final milled graphite material obtained at the end of step (c) with at least one binder and at least one additive to form a friction material composition.

The present inventors have found that a graphite material with the characteristics discussed above can be obtained by carefully selecting the feed graphite as well as adjusting the process parameters in order to obtain graphite materials characterized by the parameters described herein.

The feed graphite provided in the method according to the invention may be selected from a natural graphite, a synthetic graphite and mixtures thereof. The feed graphite provided in step (a) may be a mixture of from 10 to 90 wt% natural and from 90 to 10 wt% synthetic graphite. The feed graphite may be a ground natural graphite or a ground synthetic graphite, or a ground combination of natural and synthetic graphites. In a preferred embodiment, the feed graphite is a natural graphite.

Natural graphite is extracted from mines in which the typical content in the ore is between 3 and 10 wt%. The ore is crushed down and the graphite flakes are separated through flotation and centrifugation from the rocks. The obtained graphite has a typical purity between 85 and 96 wt%. In order to obtain higher purity, the graphite can be chemically treated using high concentrated KOH solutions followed by an acid treatment that, depending on the desired final purity, may involve concentrated HCl, $H_2SO_4$ and HF. Another possibility to obtain higher purity is to perform a thermal treatment (without the use of chemicals) .

Synthetic graphite is manufactured from natural or petroleum carbon precursors in high temperature processes that transform amorphous carbon to carbon of higher structural order. Synthetic graphite are typically produced by thermally treating precursor carbonaceous materials in an Acheson furnace (as described in US patent 933944) in which high current flux is passed through the carbonaceous materials positioned between two electrodes. The material is heated by resistive heating (Joule effect) and thermal conduction at temperatures above 2000°C where the graphitization occurs.

In the method of the present invention, the graphite provided in step (a) is subjected to a milling step to obtain a milled graphite. The graphite may be milled by means of a vibrated mill, e.g. a NAEF mill with a wolfram Carbide Container. In a preferred embodiment, the milling includes mechanic spheroidization. In this process, flakes are mechanically turned into spherical shapes. For mechanic spheroidization, a high speed rotational dry impact mill (Hybridizer, type NHSe0, Nara Machinery Co.) may be used.

Subsequently, the milled graphite is fractionated in order to obtain a final milled graphite material that has a D90 to D10 ratio of less than 4.5 (step c). During fractionation, at least one fraction of the milled graphite obtained in step (b) is removed. The size of the particles removed during fractionation depends on the PDS of the feed graphite used.

In one embodiment of the present invention, a fine fraction is removed. The fine fraction has a D50 lower than the feed graphite (feed graphite provided in step (a)). The fine fraction may be removed via air classification. Air classification can be performed using a Picoline multi-process mill equipped with a Picosplit 20 ATP classifier module (Hosokawa Alpine AG).

In one embodiment of the present invention, a coarse fraction, which has a D50 higher than the feed graphite is removed. The coarse fraction may be removed via air jet sieving. For air jet sieving, an air jet sieve e200 LS (Hosokawa Alpine AG) using sieve inlets with different mesh widths (e.g. 40, 32 or 20 mm) may be used.

In a preferred embodiment, either or both of a fine and coarse fraction of the milled graphite are removed in step (c) of the present method in order to obtain a final milled graphite material which has a D90 to D10 ratio of less than 4.5, as measured by Laser Diffraction.

The final milled graphite material provided in step (c) may further be subjected to a surface treatment (step (d)) to obtain a treated graphite material. The surface treatment may comprises a surface treatment by heat treatment and/or a surface coating treatment, such as a surface coating obtained by a chemical vapor deposition (CVD) treatment or an amorphous carbon coating treatment.

The said heat treatment may be carried out at a temperature of 700°C or more, or 800°C or more, or 850°C or more. The said heat treatment may be carried out during a duration of 30 minutes or more, preferably 60 minutes or more, or even 120 minutes or more. According to one embodiment, said thermal treatment may be carried out at a temperature comprised between 600°C and 850°C during a duration of 120 minutes or more.

According to one embodiment, the heat treatment is carried out at or above 1000°C, for at least 30 minutes. According to one embodiment, the heat treatment is carried out at or above 1000°C, for at least 60 minutes. According to one embodiment, the heat treatment is carried out at or above 1200°C, for at least 30 minutes. According to one embodiment, the heat treatment is carried out at or above 1200°C, for at least 60 minutes. According to one embodiment, the heat treatment is carried out at or above 1300°C, for at least 30 minutes. According to one embodiment, the heat treatment is carried out at or above 1300°C, for at least 60 minutes. According to one embodiment, the heat treatment is carried out at or above 1500°C, for at least 30 minutes. According to one embodiment, the heat treatment is carried out at or above 1500°C, for at least 60 minutes.

According to certain embodiments, a CVD treatment process may be performed using for example a rotary kiln, a fluidized bed furnace or a fixed bed furnace as is known from prior art applications WO 2016/008951 or EP 0 977 292. According to the methods disclosed in these publications, a hydrocarbon gas such as propane, methane or toluene and benzene vapors are decomposed at temperatures between 600°C and 1200°C. The obtained final materials are coated with a 10 nm to 100 nm continuous layer of amorphous carbon and 0.5 to 30 wt% can have hydrophobic or hydrophilic nature. Any other known CVD processes for depositing pyrolytic carbon may also be employed, such as for example thermal CVD, Plasma Enhanced CVD, Hot-Filament CVD, Low Pressure CVD, Liquid Injection CVD, etc.

According to one embodiment of the present invention, step (d) of the method of making the friction material composition may include a surface coating, such as CVD treatment, wherein the heat treatment may be carried out simultaneously to the coating treatment, or the surface coating treatment may be carried out prior to the heat treatment, for example coating of the graphite surface with a carbon precursor with subsequent carbonization under inert gas, said carbonization being in this case the heat treatment. According to some embodiments of the present invention, such CVD treatment for example uses an amorphous hydrocarbon gas, such as methane, ethane, propane, butane, benzene or toluene, in the presence of a carrier gas such as nitrogen or argon.

According to one separate embodiment, step (d) comprises a separate CVD treatment (which encompass a heat treatment and a surface coating treatment) and a separate heat treatment (which is not part of a CVD treatment), as described above. In this embodiment, the said heat treatment is independent of the said CVD treatment, and both treatments may be carried out subsequently to each other, with or without any other intermediate steps such as cooling, quenching, or chemical treatment.

According to one further embodiment, the surface treatment of step (d) may include a first heat treatment, which is part of a surface coating treatment, such as CVD coating or pitch coating with subsequent carbonization, and a second heat treatment, which is not part of a surface coating treatment, and which may be done before or after the surface coating treatment. According to one further embodiment, the said second heat treatment is a post treatment (i.e. performed done after a first treatment such as surface coating treatment).

The treated graphite material obtained at the end of step (d) or the final milled graphite material obtained at the end of step (c) is mixed with at least one binder and at least one additive (step (e)) to form a friction material composition. Other materials which may be used in friction material compositions may be added as well. The mixing may involve dry mixing the ingredients in a standard tumble mixer, with optional use of plows and choppers, to blend the ingredients into a homogeneous mixture.

According to one embodiment of the present invention, the milling of step (c) includes mechanic spheroidization and step (d) includes a surface coating treatment.

According to one embodiment of the present invention, the provided feed graphite comprises a natural graphite, the milling of step c) includes mechanic spheroidization and step (d) includes a chemical vapor deposition (CVD) treatment.

The friction material composition may be obtained in the form of a powder.

Further aspects

In a third aspect, the present invention provides for a brake pad comprising a friction material composition according to the present invention. The brake pad may comprise a backing plate and a friction pad fixed to the backing plate, wherein the friction pad is fabricated of the friction material composition of the present invention.

The brake pad may be used for disc brakes, drum brakes, or clutches in vehicles such as cars, including electric cars, heavy load vehicles, railways, bicycles and the like. In a preferred embodiment, the brake pad is for use in an electrically powered vehicle. For electric vehicles, as there is no noise coming from the engine, it is even more advantageous to use a brake pad that generates reduced noise.

The brake pad according to the present invention may have a maximum friction coefficient of 0.60 or less, for example between 0.2 and 0.60, or between 0.25 and 0.55, or between 0.3 and 0.55, as measured according to SAE J2522.

According to one embodiment of the present invention, the ratio of the maximum friction coefficient to the minimum friction coefficient of the brake pad is less than 2, wherein the friction coefficient is measured according to SAE J2522.

According to one embodiment of the present invention, the stability of the friction coefficient of the brake pad is improved compared to a brake pad otherwise identical but not comprising the graphite material as defined herein.

According to one embodiment of the present invention, the stability of the friction coefficient of the brake pad is improved compared to a brake pad otherwise identical but comprising a graphite material having a D90 to D10 ratio of more than 4.5, and/or a Scott density of less than 0.5 g/cm$^3$.

The brake pads may be prepared using standard manufacturing procedure typically used in the industry to make brake pad.

The friction material composition of the present invention may be pressed on a backing plate to form a brake pad. In a preferred embodiment, the mixture is treated by compression molding, or hot compression molding or curing by heat treatment, or combinations of these. The friction material composition may be pressed in a heated mold.

The mold may be heated to a temperature of 120 to 170°C, preferably 140 to 160°C, most preferably 150°C. The resulting brake pads are then heated up, followed by scorching. The heating may be performed up to a temperature of 225°C and the scorching at 600°C for 5 minutes. The temperature and pressure conditions that are exposed to the process may be optimized are optimum for the formation of a brake pad starting from the friction material composition according to the present invention.

In one embodiment, the friction material composition is pressed into friction pads in the form of preforms or pucks using a room temperature press operation. Variations in the process may include loose filling the mix into the pressing mold directly or by use of a liquid binder system. The preforms or pucks are then placed into a hot block mold with a metal backplate on one side and hot press cured to bond cured friction material to the backing plate to form the final brake pad. The friction material may be attached directly to a backing plate or with use of an underlayer material, as is well known in the industry. The pressing is preferably conducted at a pressure of 5 to 50 tons/piece and temperature of 130 to 150°C.

The brake pads bound for market may further undergo a post bake operation. The baking of the pressed friction pad and backing plate is preferably conducted in a standard air convention oven at a temperature of 165 to 190°C. The total post bake time is about 6 hours. The brake pads for market would also undergo one or more finishing operations, before being packaged for commercial sale.

In a forth aspect, the present invention provides for a brake assembly comprising the brake pad of the third aspect of the present invention and a brake disc. The brake disc may be a cast iron disc or a coated brake disk. The coated brake disk may be coated with hard metals such as WC or TiC.

In a fifth aspect, the present invention provides for the use of a friction material composition according to the invention, in the production of brake pads, for example in the production of low-copper brake pads, or in the production of copper-free brake pads.

In a sixth aspect, the present invention provides for the use of a friction material composition according to the invention, for improving the friction coefficient stability of a brake pad comprising said friction material composition.

## EXAMPLES

Measurement Methods

### Particle size distribution (PSD) by Laser Diffraction

The presence of particles within a coherent light beam causes diffraction. The dimensions of the diffraction pattern are correlated with the particle size. The particle size distribution for products ranging up to 150 um is measured by means of the LASER Diffraction according to ISO 13320. A laser beam lights up the measuring chamber in which the graphite sample is blown by means of compressed air, the generated diffraction pattern is collected by means of a Fourier optic system and interpreted using standard models of the light scattering theory, such as that developed by Mie, as described in detail in M. Kerker: The Scattering of Light and other Electromagnetic Radiation. Academic Press, New York 1969.

The method yields the proportion of the total volume of particles to a discrete number of size classes forming a volumetric particle size distribution. The particle size distribution is defined by the values D10, D50 and D90, wherein 10 percent (by volume) of the particle population has a size below the D10 value, 50 percent (by volume) of the particle population has a size below the D50 value and 90 percent (by volume) of the particle population has a size below the D90 value. The particle size distribution is calculated and reported in um.

The particle size distribution data by laser diffraction quoted herein have been measured with a Sympatec Helos. The sample prepared in the described manner is introduced in the storage vessel of the apparatus (Sympatec Helos).

References: ISO 13320 (2009)

**Scott Density**

The Scott density is determined by passing the dry carbon powder through the Scott volumeter according to ASTM B 329-98 (2003). The powder is collected in a 1 in 3 vessel (corresponding to 16.39 cm$^3$) and weighed to 0.1 mg accuracy. The ratio of weight and volume corresponds to the Scott density. It is necessary to measure three times and calculate the average value. The bulk density of graphite is calculated from the weight of a 250 ml sample in a calibrated cylinder.

**Graphite spring-back**

The spring-back is a source of information regarding the resilience of compacted graphite powders. A defined amount of powder is poured into a die of 20 mm diameter. After inserting the punch and sealing the die, air is evacuated from the die. Compression force of 1.5 metric tons is applied resulting in a pressure of 0.477 t/cm$^2$ and the powder height is recorded. This height is recorded again after pressure has been released. Spring-back is the height difference in percent relative to the height under pressure.

**Interlayer spacing c/2 and degree of graphitization**

The interlayer space c/2 was determined by X-ray diffractometry. The angular position of the peak maximum of the [002] and [004] reflection profiles were determined and, by applying the Bragg equation, the interlayer spacing was calculated (Klug and Alexander, Xray diffraction Procedures, John Wiley & Sons Inc., New York, London (1967)). To avoid problems due to the low absorption coefficient of carbon, the instrument alignment and nonplanarity of the sample, an internal standard, silicon powder, was added to the sample and the graphite peak position was recalculated on the basis of the position of the silicon peak. The graphite sample was mixed with the silicon standard powder by adding a mixture of polyglycol and ethanol. The obtained slurry was subsequently applied on a glass plate by means of a blade with 150 $\mu$m spacing and dried.

Interlayer spacing (d002) and the degree of graphitization (g) are directly related by the following equation:

$$\text{Degree of graphitisation: } g = \frac{(0.3440 - d_{002})}{(0.3440 - 0.3354)}$$

**Graphite crystallite size Lc**

Crystallite size Lc is determined by analysis of the [002] and [004] diffraction profiles. For the present invention, the method suggested by Iwashita (N. Iwashita, C. Rae Park, H. Fujimoto, M. Shiraishi and M. Inagaki, Carbon 42, 701-714 (2004)) is used. The algorithm proposed by Iwashita has been specifically developed for carbon materials. The widths of the line profiles at the half maximum of sample and reference are measured. By means of a correction function, the width of pure diffraction profile can be determined. The crystallite size is subsequently calculated by applying Scherrer's equation (P. Scherrer, Göttinger-Nachrichten 2 (1918) p. 98).

**Specific BET surface area**

The method is based on the measurement of the absorption isotherm of liquid nitrogen in the range p/p0 = 0.04-0.26, at 77 K. The nitrogen gas adsorption was performed on a Quantachrome Autosorb-1. Following the procedure proposed by Brunauer, Emmet and Teller (Adsorption of Gases in Multimolecular Layers, J. Am. Chem. Soc., 1938, 60, 309- SI 9), the monolayer capacity can be determined. On the basis of the cross-sectional area of the nitrogen molecule, the monolayer capacity and the weight of sample, the specific surface can then be calculated. The isotherm measured in the pressure range p/p0 = 0.01-1, at 77 K may be processed with DFT calculation in order to assess the pore size distribution, micro- and mesopore volume and area.

Reference: Ravikovitch, P., Vishnyakov, A., Russo, R., Neimark, A., Langmuir 16 (2000) 2311-2320; Jagiello, J., Thommes, M., Carbon 42 (2004) 1227-1232.

**Oil Absorption Number**

A slow filter paper was placed into a special centrifuge metal tube having an inner diameter of 13.5 mm and a sieve on the bottom (18 mesh). In order to wet the filter, 0.5 g of paraffinic oil (Marcol 82 from Exxon Mobile) was filled into the tube and centrifuged for 30 minutes at 521 g (1g = 9.81 m/s$^2$, corresponding to 1500 rpm in the Sigma 6-10 centrifuge). After the wetting procedure, the tube was weighed and 0.5 g of graphite powder was added. The graphite was covered with 1.5 g of paraffinic oil and centrifuged for 90 minutes at 521 g. After centrifuging, the tube was weighed. The oil absorption in ml per 100 g of graphite powder was calculated on the basis of the weight increase.

- Imerys internal method

Example 1 Preparation of graphite material

800 grams of natural shaped graphite were loaded into the vertical electrically heated fluidized bed reactor at ambient temperature. The reactor was heated up to 875 °C to 950 °C under constant flow of nitrogen gas. Nitrogen was used in order to avoid oxidation of graphite at temperatures > 500 °C. Once the temperature was reached, hydrocarbon vapors (benzene, toluene) were introduced inside the reactor with the help of nitrogen. In order to reach appropriate amount of coating, amount of the hydrocarbon was controlled. For 4% of coating, around 50g of hydrocarbon were inserted into the reactor once the temperature was stable. Once all of the hydrocarbon was delivered, the reactor was purged and cooled down under nitrogen. This resulted in IE1 having the properties discussed below.

Example 2 Properties of different graphite materials

In Table 1 the properties of inventive graphite material IE1 prepared in Example 1 is compared to the properties of three graphite materials used in brake pad applications, namely synthetic graphite TIMREX T800 (CE1), synthetic graphite TIMREX T75 (CE2), and experimental graphite RC-1064 (CE3). All three comparative graphite materials are available from Imerys Graphite & Carbon.

Table 1 - Properties of graphite powders

|  | Invention | Comparative examples | | |
|---|---|---|---|---|
|  | IE1 | CE1 | CE2 | CE3 |
| D10 ($\mu$m) | 11 | 50 | 5 | 6 |
| D50 ($\mu$m) | 16 | 397 | 25 | 26 |
| D90 ($\mu$m) | 23 | 793 | 68 | 74 |
| d90/d10 | 2.1 | 17.5 | 13.6 | 12.3 |
| BET (m$^2$/g) | 4.0 | 3.6 | 8.0 | 3.1 |
| Oil absorption (ml/100g) | 45 | 27 | 92 | 79 |
| spring-back | 34% | 25% | 24% | 71% |
| Lc (nm) | 190 | 191 | 178 | 145 |
| c/2 (nm) | 0.3356 | 0.3355 | 0.3355 | 0.3358 |
| Scott density (g/cm3) | 0.73 | 0.44 | 0.21 | 0.37 |

As can be seen from the data in Table 1, IE1 has a much lower D90/D10 ratio and also a higher Scott density compared to the comparative graphites used in brake pads (CE1-3).

Example 2- Preparation of friction material compositions

Friction material compositions were prepared using the ingredients as listed in Table 2.

Table 2 - Friction material compositions

| Component | Weight % |
|---|---|
| Phenolic novolac resin | 6.0 |
| Aramid Pulp | 1.0 |
| Tyre Powder | 2.0 |

(continued)

| Component | Weight % |
|---|---|
| Calcium fluoride | 3.0 |
| Aluminum oxide | 7.6 |
| Baryte | 5.6 |
| Antimony trisulfide | 8.2 |
| Magnesium oxide | 5.6 |
| Vermiculite | 7.5 |
| Chromite | 5.6 |
| Coke | 12.7 |
| Silicon carbide | 2.0 |
| Steel Fiber | 26.0 |
| Graphite material | 7.2 |

As graphite materials, either IE1 or comparative graphite materials CE1-3 described above were used in the friction material compositions prepared.

Example 3 Brake pad production

The brake pads were prepared according to standard manufacturing procedure.

The friction material compositions prepared in Example 2 were pressed in a mold heated at 150-160°C. The resulting brake pads were then heated up to 225°C, followed by scorching at 600°C for 5 minutes.

Performance tests were performed according to SAE J2522 (Dynamometer Global Brake Effectiveness) using cast iron discs as counterparts and results are illustrated in Figure 1. Commercial cast iron disc NK 313678 was used.

The results regarding the friction material are summarized in Table 3 below.

Table 3 - Properties of brake pads

|  | IE1 | CE1 | CE2 | CE3 |
|---|---|---|---|---|
| min friction coefficient | 0.27 | 0.26 | 0.26 | 0.26 |
| max friction coefficient | 0.53 | 0.66 | 0.62 | 0.61 |
| delta (max-min) | 0.26 | 0.40 | 0.36 | 0.35 |
| ratio max/min | 1.96 | 2.53 | 2.38 | 2.35 |
| Friction coefficient stability | +++ | + | ++ | ++ |

As shown in Table 3 and Figure 1, inventive graphite IE1 surprisingly has a much more stable friction coefficient in most of the sections compared to standard graphite for brake pads and compared to experimental graphite designed for this application.

A stable friction coefficient is very important in order to have the same brake performance in all conditions, and it also has a beneficial effect on noise reduction (less vibrations induced by unstable friction coefficient), which is a very important feature for electric vehicles. Accordingly, a stable friction coefficient leads to good braking performance and low brake noise.

Example 4 Heating test

When braking, the brake pads are pressed against the brake disc and cause friction. In this case, the brake disc heats up as the kinetic energy created under braking is converted into heat. The heating was measured according to Section 14 of SAE J2522 Fade 2.

The results of the brake disc temperature are given in the Table 4 below.

Table 4 - Brake disc temperature

| | $T_{max}$(°C) (Fade 2; section 14) |
|---|---|
| CE1 | 681 |
| CE2 | 690 |
| CE3 | 698 |
| IE1 | 588 |

As shown in Table 4, the inventive friction material composition comprising IE1 leads to lower heating of the brake disc, which is beneficial (lower risk of degradation, durability) compared to the brake pads prepared using the comparative friction materials. This effect described above for section 14 was observed for most of the sections of performance test SAE J2522 as well.

**Claims**

1. A friction material composition comprising:

   a) at least one binder,
   b) at least one additive, and
   c) a graphite material, wherein the graphite material has:

      i) a D90 to D10 ratio of less than 4.5, as measured by Laser Diffraction, and
      ii) a Scott density of at least 0.5 g/cm$^3$, as measured using a Scott Volumeter according to ASTM B 329-20.

2. The friction material composition according to any of claims 1 or 2, wherein the graphite material has a D90 to D10 ratio of less than 4.0, preferably less than 3.5, such as less than 3.0 or less than 2.5.

3. The friction material composition according to any of the preceding claim, wherein the graphite material has a Scott density of at least 0.55 g/cm$^3$, preferably at least 0.6 g/cm$^3$, such as at least 0.65 g/cm$^3$, or at least 0.70 g/cm$^3$.

4. The friction material composition according to any of the preceding claim, wherein the first graphite material has a D90 of 5 to 60 pm, preferably of 10 to 50 pm, such as 15 to 40 pm.

5. The friction material composition according to any of the preceding claim, wherein the friction material composition comprises 0.1 to 30 wt% of the graphite material, based on the total weight of the friction material composition, preferably 1 to 20 wt% or 1 to 15 wt%, or 2 to 10 wt%, or 3 to 9 wt%, or 4 to 8 wt%.

6. The friction material composition according to any of the preceding claim, wherein the at least one additive is selected from the group consisting of fibers, abrasives, lubricants, and/or fillers.

7. The friction material composition according to any of the preceding claim, further comprising at least one supplemental graphite material, wherein the at least one supplemental graphite material has a D90 to D10 ratio of more than 4.5, as measured by Laser Diffraction, and/or a Scott density of less than 0.5 g/cm$^3$, as measured using a Scott Volumeter according to ASTM B 329-98 20, and wherein the at least one supplemental graphite material is preferably a natural graphite, a synthetic graphite, an expanded graphite, or combinations thereof.

8. The friction material composition according to any of the preceding claim, wherein the graphite material and/or at least one supplemental graphite material is a milled natural or synthetic graphite, preferably a mechanically spheroidized natural or synthetic graphite.

9. The friction material composition according to claim 8, wherein the milled natural or synthetic graphite is further surface-treated, wherein the surface treatment preferably includes a surface treatment by heat treatment and/or a surface coating treatment, such as a surface coating obtained by a chemical vapor deposition process.

10. A brake pad comprising a friction material composition as defined in any one of claims 1 to 9, preferably for use in an electrically powered vehicle.

11. A brake pad according to claim 10, wherein the ratio of the maximum friction coefficient to the minimum friction coefficient of the brake pad is less than 2, wherein the friction coefficient is measured by the method described in the description.

12. The brake assembly comprising a brake pad as defined in any one of claims 11 or 12 and a brake disc, wherein the brake disc is preferably a cast iron disc or a coated brake disc.

13. A method of making a friction material composition according to any one of claims 1 to 9, comprising the steps of

> (a) providing a feed graphite,
> (b) subjecting the feed graphite to a milling step to obtain a milled graphite, preferably including mechanic spheroidization,
> (c) removing at least one fraction of the milled graphite in order to obtain a final milled graphite material which has a D90 to D10 ratio of less than 4.5, as measured by Laser Diffraction, wherein preferably a fine fraction, which has a D50 lower than the feed graphite provided in step (a) and/or a coarse fraction, which has a D50 higher than the feed graphite provided in step (a) is removed,
> (d) optionally subjecting the final milled graphite material provided in step (c) to a surface treatment, wherein the surface treatment preferably comprises a surface treatment by heat treatment and/or a surface coating treatment, such as a surface coating obtained by a chemical vapor deposition (CVD) treatment or an amorphous carbon coating treatment;
> (e) mixing the treated graphite material obtained at the end of step (d) or the final milled graphite material obtained at the end of step (c) with at least one binder and at least one additive, to form a friction material composition.

14. Use of a friction material composition as defined in any one of claims 1 to 9 in the production of brake pads, preferably in the production of low-copper brake pads, or in the production of copper-free brake pads.

15. Use of a friction material composition as defined in any one of claims 1 to 9 for improving the friction coefficient stability of a brake pad comprising said friction material composition.

# FIG 1A

IE1

FIG 1B

CE1

**FIG 1C**

CE2

# FIG 1D

CE3

# Figure 2

**Europäisches Patentamt**
**European Patent Office**
**Office européen des brevets**

# EUROPEAN SEARCH REPORT

Application Number

EP 23 30 6228

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 227 262 B (IMERTECH SAS) 31 January 2023 (2023-01-31) | 1,3-15 | INV. F16D69/02 C01B32/05 |
| A | * claim 1 * <br> * paragraph [n0115] * <br> * paragraph [n0120] * <br> * paragraph [n0122] * <br> ----- | 2 | |
| A | EP 3 131 848 B1 (IMERYS GRAPHITE & CARBON SWITZERLAND LTD [CH]) 28 March 2018 (2018-03-28) <br> * paragraph [0019] * <br> * paragraph [0129] * <br> ----- | 1-15 | |

TECHNICAL FIELDS SEARCHED (IPC)

F16D
C01B

The present search report has been drawn up for all claims

| Place of search | Date of completion of the search | Examiner |
|---|---|---|
| The Hague | 14 December 2023 | Domínguez Gutiérrez |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 30 6228

14-12-2023

| Patent document cited in search report | | Publication date | Patent family member(s) | | Publication date |
|---|---|---|---|---|---|
| CN 113227262 | B | 31-01-2023 | CN | 113227262 A | 06-08-2021 |
| | | | EP | 3674371 A1 | 01-07-2020 |
| | | | EP | 3906282 A1 | 10-11-2021 |
| | | | ES | 2928558 T3 | 21-11-2022 |
| | | | HU | E059887 T2 | 28-01-2023 |
| | | | JP | 2022515856 A | 22-02-2022 |
| | | | KR | 20210107841 A | 01-09-2021 |
| | | | US | 2022090644 A1 | 24-03-2022 |
| | | | WO | 2020141131 A1 | 09-07-2020 |
| EP 3131848 | B1 | 28-03-2018 | BR | 112016021042 A2 | 15-08-2017 |
| | | | CA | 2942243 A1 | 22-10-2015 |
| | | | CN | 106170880 A | 30-11-2016 |
| | | | DK | 3131848 T3 | 22-05-2018 |
| | | | EP | 3131848 A2 | 22-02-2017 |
| | | | EP | 3375754 A1 | 19-09-2018 |
| | | | ES | 2667211 T3 | 10-05-2018 |
| | | | HK | 1231457 A1 | 22-12-2017 |
| | | | HU | E037398 T2 | 28-08-2018 |
| | | | JP | 6687531 B2 | 22-04-2020 |
| | | | JP | 2017513793 A | 01-06-2017 |
| | | | KR | 20160145565 A | 20-12-2016 |
| | | | NO | 3131848 T3 | 25-08-2018 |
| | | | PL | 3131848 T3 | 28-09-2018 |
| | | | US | 2017033360 A1 | 02-02-2017 |
| | | | WO | 2015158741 A2 | 22-10-2015 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3088764 A1
- EP 3674371 A1
- US 933944 A
- WO 2016008951 A
- EP 0977292 A

**Non-patent literature cited in the description**

- **BRUNAUER** ; **EMMET** ; **TELLER**. Adsorption of Gases in Multimolecular Layers. *J. Am. Chem. Soc.*, 1938, vol. 60, 309
- **M. KERKER**. The Scattering of Light and other Electromagnetic Radiation. Academic Press, 1969
- **KLUG** ; **ALEXANDER**. Xray diffraction Procedures. John Wiley & Sons Inc., 1967
- **N. IWASHITA** ; **C. RAE PARK** ; **H. FUJIMOTO** ; **M. SHIRAISHI** ; **M. INAGAKI**. *Carbon*, 2004, vol. 42, 701-714
- **P. SCHERRER**. *Göttinger-Nachrichten*, 1918, vol. 2, 98
- **RAVIKOVITCH, P.** ; **VISHNYAKOV, A.** ; **RUSSO, R.** ; **NEIMARK, A.** *Langmuir*, 2000, vol. 16, 2311-2320
- **JAGIELLO, J.** ; **THOMMES, M.** *Carbon*, 2004, vol. 42, 1227-1232